# EUROPEAN PATENT SPECIFICATION

(11) **EP 3 713 387 B1**
(45) Date of publication and mention of the grant of the patent: **17.07.2024**
(21) Application number: 18785352.8
(22) Date of filing: 10.10.2018
(51) Int. Cl.: A01B 59/00, G06F 3/01, G06F 3/0488, G06T 19/20, G06T 19/00, G06F 3/03

(54) **IMPLEMENT TRACTOR CONNECTION APPLICATION**
ARBEITSGERÄTETRAKTORVERBINDUNGSANWENDUNG
APPLICATION DE COUPLAGE POUR UN TRACTEUR À INSTRUMENT

(30) Priority: 21.11.2017 GB 201719274
(43) Date of publication of application: 30.09.2020
(73) Proprietor: AGCO International GmbH, 8212 Neuhausen am Rheinfall (CH)
(72) Inventor: KNOBLOCH, Juergen, 87616 Marktoberdorf (DE)
(74) Representative: AGCO Intellectual Property Department
(86) International application number: PCT/EP2018/077576
(87) International publication number: WO 2019/101418

(56) References cited:
- WO-A1-2011/154072
- CA-A1- 2 241 523
- DE-A1- 102011 120 884
- US-A1- 2008 100 570
- US-A1- 2013 278 635
- US-A1- 2017 039 787

## Description

### FIELD OF THE INVENTION

The present invention relates to implement connections on agricultural vehicles. More specifically, the invention relates to generating a guide to assist with locating the connection hoses of an implement to a specific connection port on an agricultural vehicle.

### TECHNICAL BACKGROUND

Agricultural vehicles e.g. tractors are used in conjunction with a number of different implements which receive hydraulic, pneumatic and electrical power from the tractor. The tractor may tow the implement, for example, a baler or the implement may be mounted on the tractor, for example, a sprayer.

Generally implements can have up to six double acting hydraulic valves which require the connection of twelve individual hydraulic hoses, in addition a number of mechanical, Power Beyond, pneumatic and electrical connections may be required when coupling the implement to the tractor so that the tractor/implement assembly is equipped to perform a task. It is often necessary to change the implement that is connected to the tractor to perform a different function. When coupling a new or different implement to a tractor, the hydraulic setting of the particular hydraulic connection points on the tractor may need to be adjusted or otherwise altered to suit the requirements of the attached implement.

Some tractors offer the possibility of storing the settings of the hydraulic valves or other implement connection points, this enables quick set up of the implement when it is reattached to the tractor after a different implement has been used.

However, currently there is no standardised coding of which hose or implement connection is connected to which connector port on the tractor. As such, when the operator of the tractor has to remember or otherwise identify which hose goes to which connection port in order to utilise the saved hydraulic valve settings. This is laboursome and does not facilitate efficient use of an operator's time nor easy changeover of implements. In addition, implement hoses cannot be reliably and repeatably attached to a specific connection point on a tractor.

CA2241523A1 discloses a system and method for matching hydraulic outlets on a tractor which includes using identifying plates and coded labels. WO2011/154072A1 discloses an augmented reality system which identifies connectable components through sensing and outputting an augmented representation of the compatibility of those components. US2008/100570A1 discloses an augmented reality system for supporting a user of an engineering apparatus. US2013/278635A1 describes an augmented reality system and method for assembly first and second set-up components of a production set-up. DE102011120884A1 describes a method for identifying compatibility of different implements for an agricultural vehicle.

An object of the invention is to provide a guide for repeatably connecting a specific connector e.g. a hydraulic hose, pneumatic coupling, CANBUS interface etc, of a particular implement to a specific connection point in the connection area of a tractor thereby addressing some or all of the above mentioned problems.

### SUMMARY OF THE INVENTION

Accordingly, there is provided a method for generating a guide for the connection of an implement with an agricultural vehicle, the method being the solution to the technical problem is defined by the subject-matter of independent claim 1, defining per se the invention. Particular embodiments of the invention are defined in the dependent claims 2-12.

By providing an augmented image of the connection area of an agricultural vehicle, different connection points of the connection area can be identified and associated with different implement connectors that are to be coupled with the connection points, this provides an operator with an easily-understandable guide for the correct connection of the implement with the vehicle that that is readily repeatable.

By providing a real-time augmented reality image an operator may easily see the location of any connection points which are identified in the connection area of the vehicle. Alternatively, providing an annotated static image of the connection area with the connection points highlighted can provide a useful alternative way of showing an operator the location of the connection points on the vehicle. For instance, an annotated static image may be useful when there is a necessity for an image to be printed out or for use by an operator working an area with no or intermittent data connectivity.

The augmented image may be provided as a real-time augmented reality image or the augmented image may be provided as a still or static captured image of the connection area which may be annotated with information regarding the at least one connection point.

The method may further comprise the step of selecting the format of the augmented image.

Advantageously, by allowing the operator to select the format of the augmented image, the operator may easily select between options, depending on the real life circumstances.

The step of analysing the image to identify the at least one connection point of the connection area may comprise performing an image processing of the image to identify fiducial markers associated with one or each of the at least one connection point. Advantageously, by providing the connection points with machine-readable markers the connection points may easily be located in the image thereby requiring limited operator intervention.

The method may further comprise the steps of receiving an indicator for a particular implement connector to be coupled with the connection area; identifying on the augmented image the location of the identified connection point to which the particular implement connector is to be coupled from the implement connection map. Advantageously, when an operator selects a particular implement connector, e.g. a hydraulic hose, an augmented image will be shown highlighting which connection point of the connection area the connector is to be coupled with, thus providing a clear easy to understand guide for the operator to follow.

Advantageously, different implement connection lists may be provided for different implements, reflecting the preferred coupling configurations for the different implements and/or the different number or types of implement connectors to be used. Thereby allowing a multitude of different implements to easily and interchangeably be connected to the agricultural vehicle.

The step of receiving an implement connection list may comprise retrieving the implement connection list from a memory storage device.

The step of receiving an implement connection list may comprise downloading an implement connection list from a remote location or server.

The step of receiving an indicator for a particular implement connector may comprise one or more of: an operator selection of the particular implement connector from an implement connection list; and/or a direct input by the operator of the particular implement connector details; and/or scanning a machine readable element provided with the implement connector.

Generation of the implement connection list for use as an input to an operator terminal of an agricultural vehicle may comprise the steps of: providing an image of a connection area of an agricultural vehicle, the connection area for connection with an implement having implement connectors to be coupled with the agricultural vehicle, the image having at least one connection point of the connection area identified thereon; receiving an indicator of an implement connector of an implement to be coupled with at least one connection point of the connection area; storing an implement connection list comprising a listing of the at least one connection point and the implement connectors to be coupled with one or each of the at least one connection point.

The step of receiving an indicator may comprise receiving an operator input to indicate a selected connection point and receiving user input to indicate a selected implement connector to be disconnected with the selected connection point.

The step of receiving an indicator for a particular implement connector may comprise one or more of: an operator selection of the particular implement connector from an implement connection list; and/or a direct input by the operator of the particular implement connector details; and/or scanning a machine readable element provided with the implement connector.

The step of receiving an operator input to indicate a selected connection point may comprise receiving an operator selection of a connection point identified on the augmented image.

The implement connection list may be used as an input for an operator terminal of an agricultural vehicle, to facilitate configuration of the operator controls of the vehicle.

The implement connection list may be transmitted directly from a mobile device to the operator terminal of an agricultural vehicle.

The implement connection list may be stored on a memory device which may be coupled with the operator terminal.

A mobile processing device according to the invention as defined by the subject-matter of independent claim 13 is arranged to carry out the aforementioned method.

The mobile processing device may comprise a camera and a display.

The mobile processing device may comprise an augmented reality headset or smart glass unit.

### INTRODUCTION TO THE DRAWINGS

Embodiments of the invention will now be described, by way of example only, with reference to the accompanying drawings, in which:
Fig. 1 shows a tractor and an implement;
Fig. 2 is a view of the rear of the tractor of figure 1 ;
Fig. 3 is an illustration of an image being captured of the connection area of the tractor of figure 2;
Fig. 4 is the captured image of the connection area of figure 3;
Fig. 5 shows the image of figure 4 displayed on a mobile device;
Fig. 6 shows the mobile device of figure 5 with connection points marked;
Fig. 7 shows the mobile device of figure 6 with further connection points marked;
Fig. 8 shows the mobile device of figure 7 with further connection points marked;
Fig. 9 shows the mobile device of figure 8 with further connection points marked;
Fig. 10 shows the implement of figure 1 including connection hoses;
Fig. 11 shows the tractor of figure 2 receiving the connection hoses of figure 10;
Fig. 12 shows an operator selecting an annotated connection point on a mobile device;
Fig. 13 is an illustration of a connection hose being disconnected from the tractor of figure 2;
Fig. 14 is an illustration of the tractor of figure 2 being viewed on a mobile device;
Fig. 15 shows a connection hose in proximity to a mobile device which is displaying an indication of where the connection hose should be coupled;
Fig 16. is an illustration of a connection hose being coupled to the tractor of figure 2.

The drawings are provided by way of reference only, and will be acknowledged as not to scale.

### SPECIFIC DESCRIPTION OF THE INVENTION

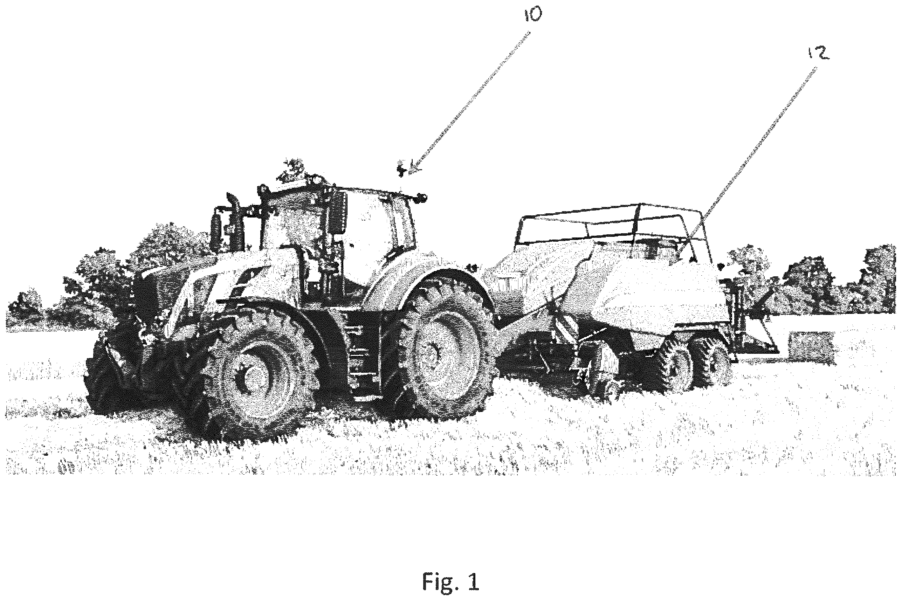

With reference to figure 1, there is provided an agricultural vehicle, specifically a tractor 10. The tractor 10 is operably coupled to an implement 12.

In this example, the agricultural vehicle is tractor 10, but it will be understood that the invention may be used with other vehicles e.g. a combine harvester or self-propelled spreader having comparable connection areas to be coupled with an implement e.g. as sprayers, ploughs or balers.

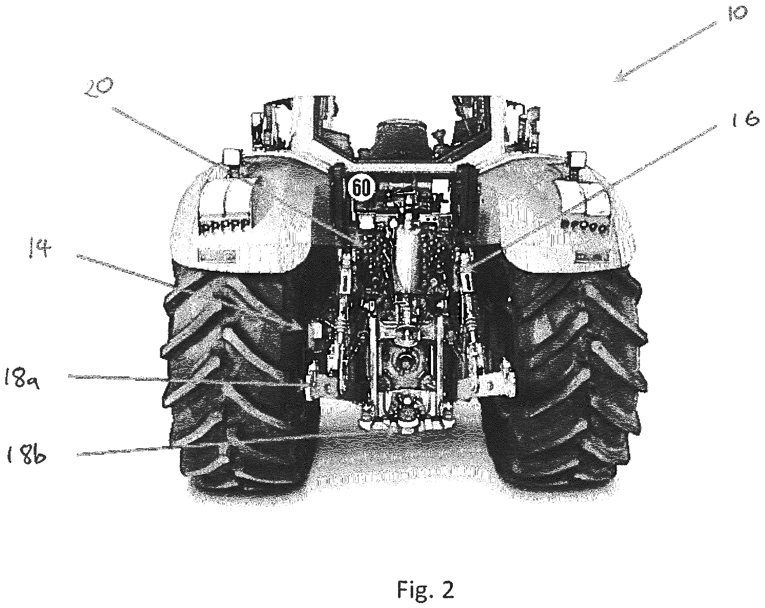

With reference to figure 2, the rear of the tractor 10 is shown. The tractor 10 has a hitch assembly 14, connection area 16 and connection points 20.

The hitch assembly 14 includes a three point hitch 18a and a towing hitch 18b. The hitch assembly 14 is configured to attach the implement 12 to the tractor 10.

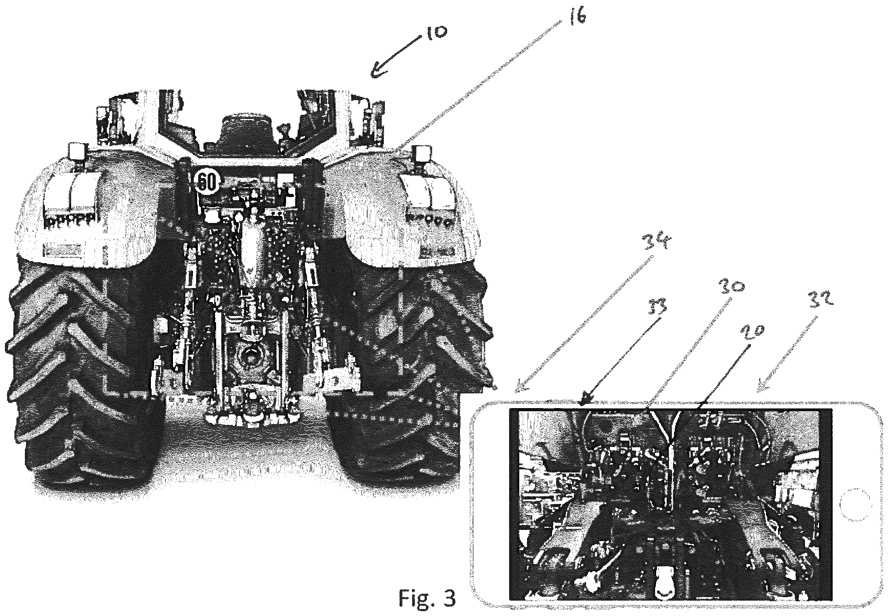

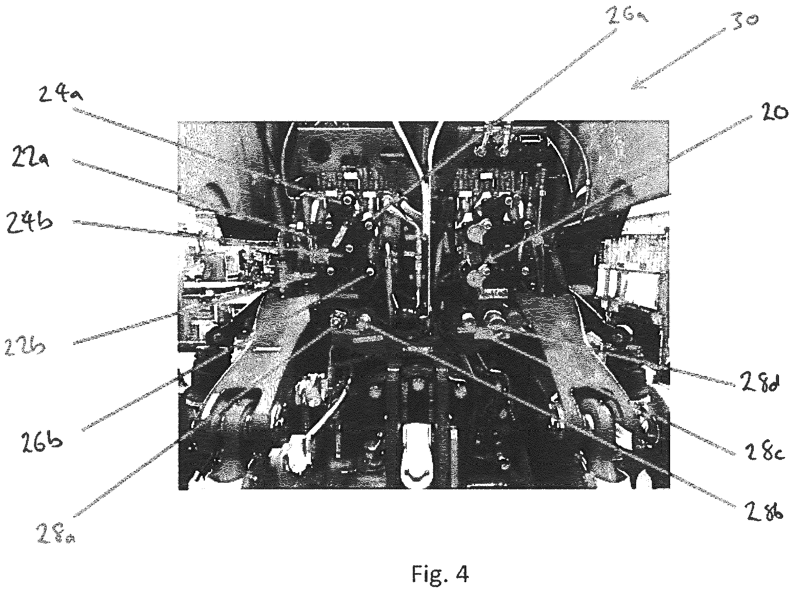

With reference to Figure 3 and figure 4, an image 30 of the connection area 16 of the tractor 10 is being generated. The image 30 clearly displays the connection points 20. The image 30 is generated by a mobile device 32 having a camera 34 and a display 33.

The image 30 of the connection area 16 shows the connection points 20. In this example, the connection area 16 comprises (best seen in figure 4): six hydraulic hose connectors 22a, 22b, 24a, 24b, 26a and 26b and four power beyond connectors 28a, 28b, 28c and 28d. It will be understood that the connection area 16 may also include multiple pneumatic connectors, electrical power connectors and any other connectors that may be required to couple operably connect the tractor 10 to the implement 12.

To generate a guide according to the invention, the location of each of the connection points 20 must be identified.

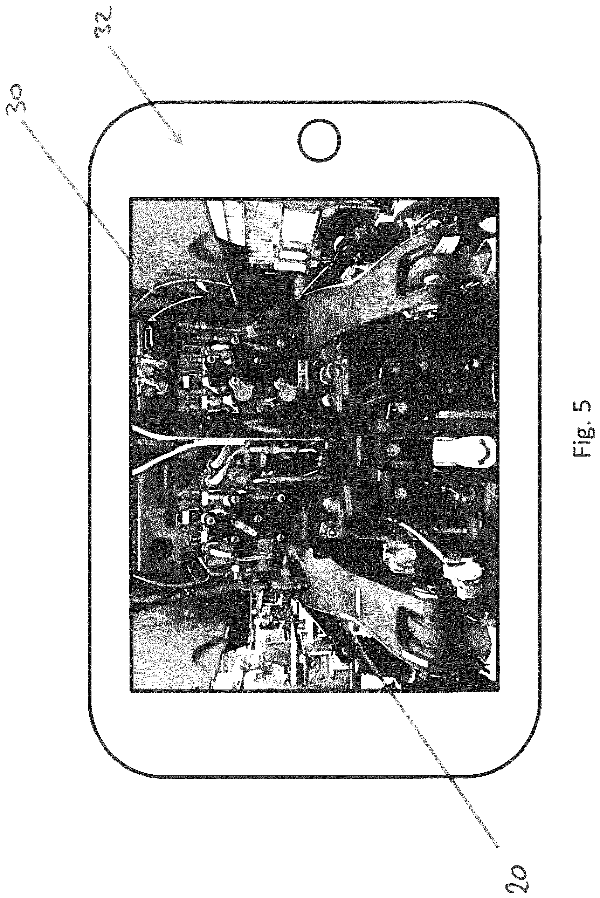

With reference to figure 5, the image 30 of the connection area 16 of the tractor 10 is opened on the mobile device 32. The image 30 may be a stored image that is saved in memory of the mobile device 32 or, as in this example, the mobile device has a camera 34 which is used to capture the image 30 of the tractor 10 as shown in figure 3.

The image 30 is shown in figure 5 as it would be displayed on the mobile device 32. Each of the connection points 20 can clearly be seen in the image 30. The connections points 20 may be marked with fiducial markers such that the mobile device 32 can automatically identify the location of each of the connection points 20. In this specific example, an operator must next mark each of the connections points location on the image 30 on the mobile device 32 by tapping the location of each hydraulic hose connector 22a, 22b, 24a, 24b, 26a and 26b and each power beyond connector 28a, 28b, 28c and 28d. To do this, an operator taps the location of each of the connection points 20 on the display 33 of the mobile device 32.

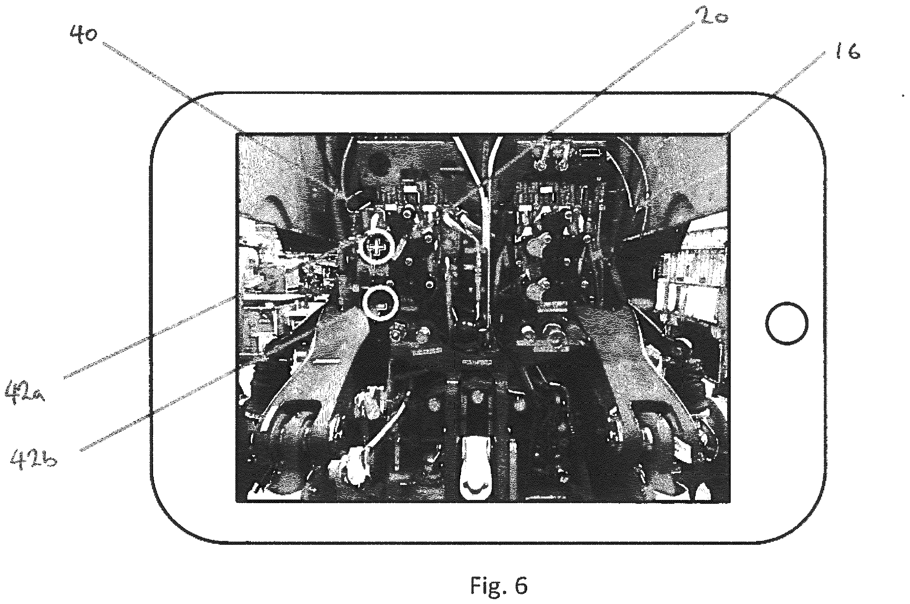

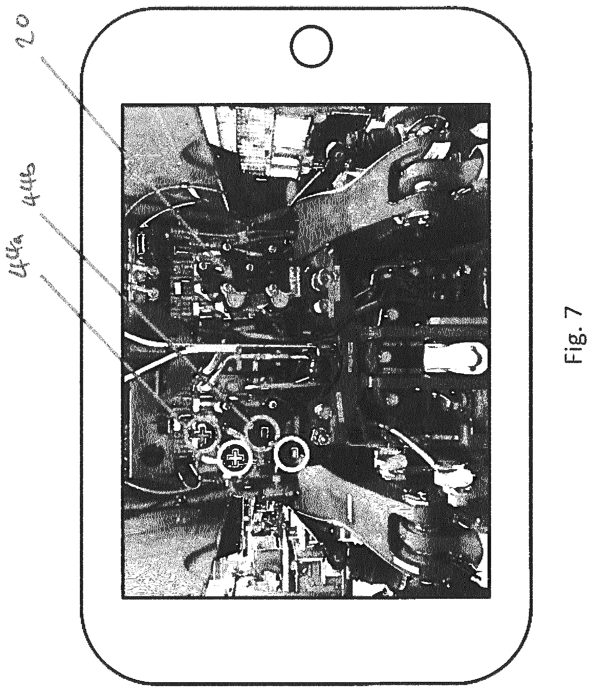

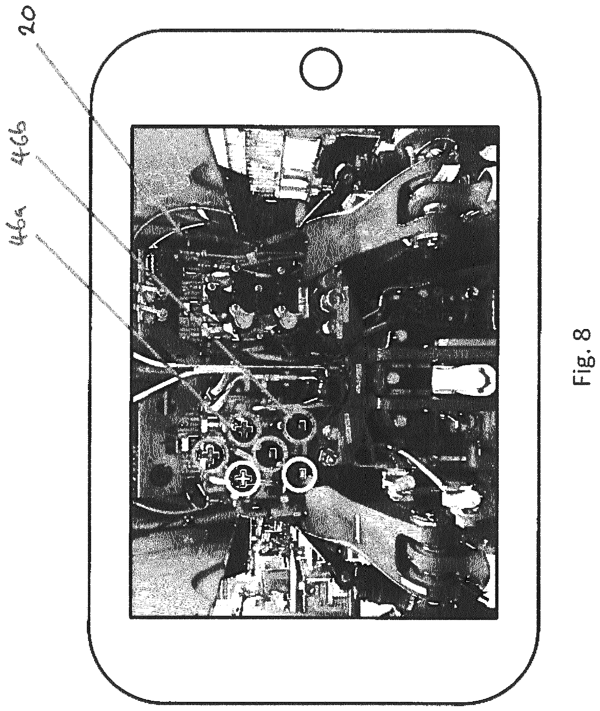

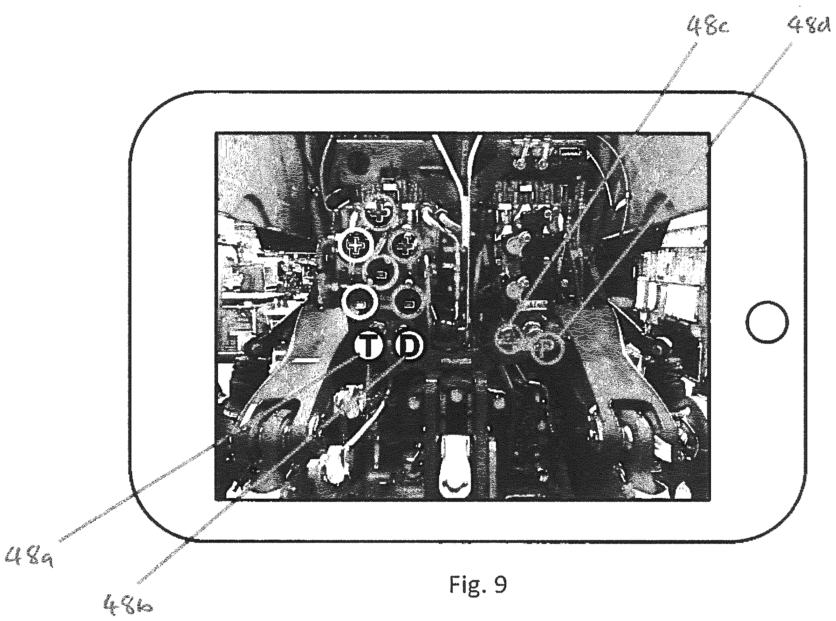

The mobile device 32 annotates the image with symbols 40 (see figures 6 to 9) indicating when an operator has successfully marked the location of a connection point. Symbols 42a, 42b, 44a, 44b, 46a, and 46b correlate to the locations of hydraulic hose connectors 22a, 22b, 24a, 24b, 26a and 26b respectively. Similarly, symbols 48a, 48b, 48c, and 48d correlate to the locations of power beyond connectors 28a, 28b, 28c and 28d respectively. Figures 6 to 9 illustrate the sequential marking of the connection points 20 as a symbol 40 is allocated to each specific connection point 20.

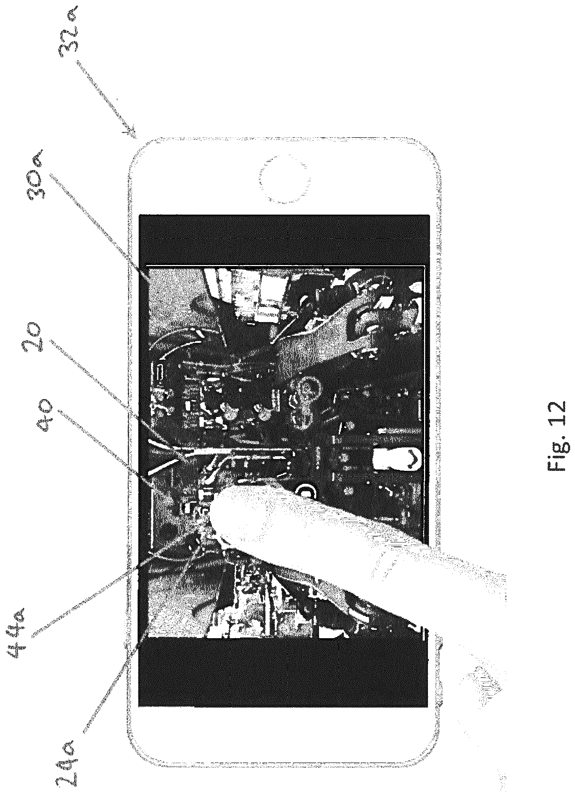

Once the locations of each of the connection points 20 have been correctly identified by an operator and marked, by the assignation of a symbol 40 on the image 30 by the mobile device 32, the annotated image 30a (shown in fig. 12) also known as implement connection map can be saved, in this case in the memory of the mobile device 32. Alternatively, the image may be uploaded to a cloud based archive or saved to a removable memory storage device.

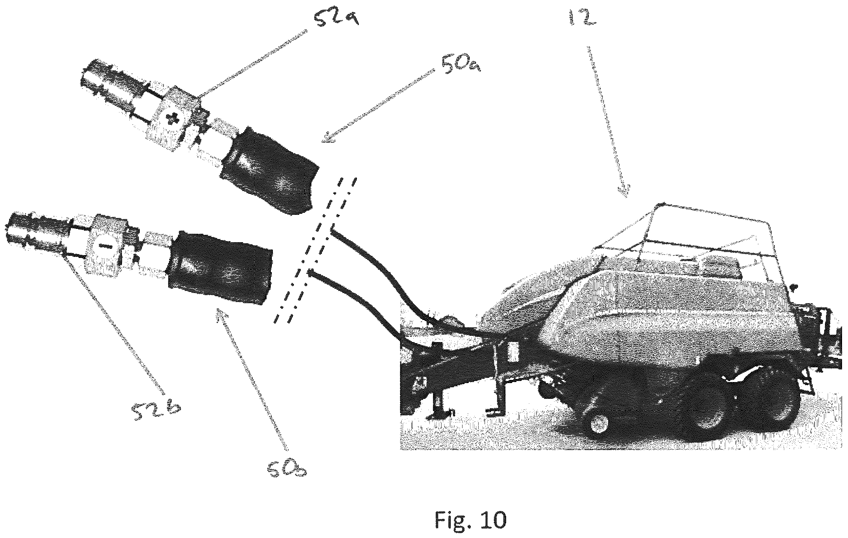

Once the connection point 20 locations have been stored, the implement 12 operating and connection settings can be generated and stored. Implement connection hoses 50a and 50b are provided with a near field communication (NFC) markers 52a and 52b, the NFC markers may be for instance an RFID tag or NFC cable tie. Figure 10 shows two connection hoses 50a and 50b, but, it will be understood that the implement 12 will have a number of connection hoses and electrical connections which need to be connected to the connection area 16 of the tractor 10 such that the tractor 10 and implement 12 can operate correctly. As such, the connection hoses 50a and 50b are merely representative of a larger number of connections hoses and other electrical and/or mechanical connections. It will also be understood that alternatively, the operation and connection settings may be set before the connection point 20 locations have been stored.

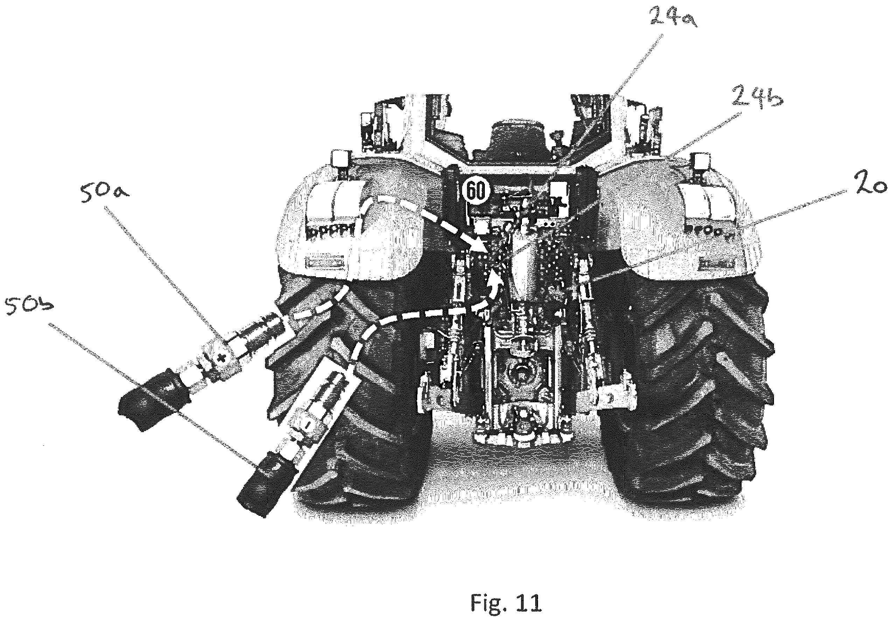

With reference to figure 11, an operator will next connect the connection hoses 50a and 50b to the connection area 16 of the tractor 10, in this specific example, connection hose 50a is coupled with hydraulic hose connector 24a and connection hose 50b is coupled with hydraulic hose connector 24b.

Once the implement 12 has been appropriately coupled to the tractor 10, the operator may specify preferable settings and parameters for the implement 12 using the tractors 10 operator terminal (not shown). The specified settings and parameters for the implement 12 are then stored in the tractor 10 terminal recipe library in a known manner.

When generating an implement connection list, each connection hose 50a, 50b can be associated with the specific connection point 20 with which it was coupled when the implement 12 settings were created and stored, such that the specific connections can be reused when the particular implement 12 is attached to the tractor 10 in the future.

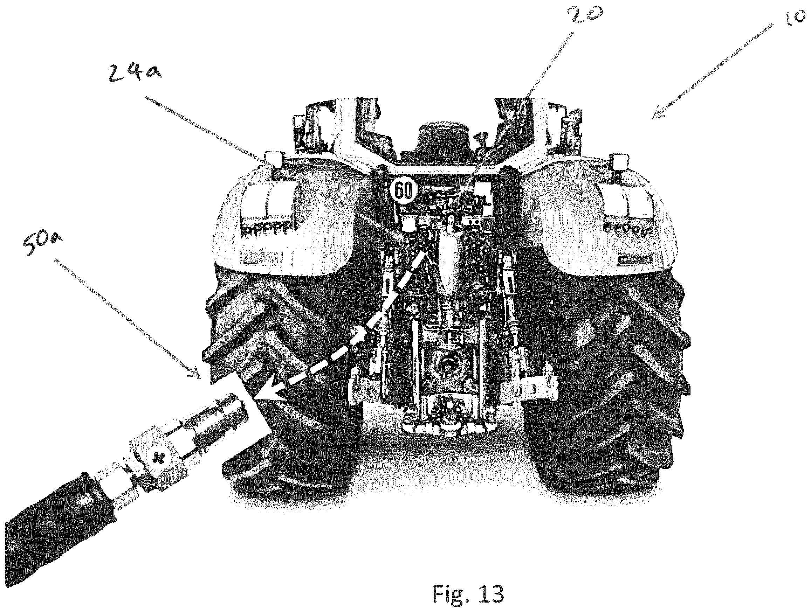

With reference to figure 12, the fully annotated image 30a is opened on the mobile device 32. An operator then selects one of the symbols 40 that correlates specific connection point 20 on the annotated image 30a from which the connection hose 50a, 50b will be disconnected. In this example, the operator selects the symbol 44a, which marks connection point 24a and disconnects the connection hose 50a from the tractor 10 (see figure 13).

The connection hose 50a is brought into proximity with the mobile device 32 so that the NFC Marker 52a can be read by the mobile device 32. It will be understood that if the mobile device 30 is not capable of reading an NFC marker, then a suitable reader will be provided for use in conjunction with the mobile device 32.

Once the mobile device 32 has read the NFC marker 52a, the connection hose 50a is successfully associated with the hydraulic hose connector 24a from which it has been disconnected.

The operator next selects the symbol 44b, which marks connection point 24b and disconnects the connection hose 50b. The connection hose 50b is then brought into proximity with the mobile device 32 so that the NFC Marker 52b can be read by the mobile device 32. The connection hose 50b is now successfully associated with the hydraulic hose connector 24b from which it has been disconnected.

It will be understood that this process will be repeated for each of the connection points 20 of the connection area 16 until the implement is completely disconnected from the tractor 10.

All the required settings and parameters of the implement 12 are stored in the recipe library of the tractor 10. In addition, all the connection hoses 50a, 50b are associated with a specific connection point 20.

The aforementioned process may be repeated for further implements (not shown). The connection data can be stored locally on the mobile device 32. Alternatively, the connection data may be stored in a cloud based memory system or on a removable storage device.

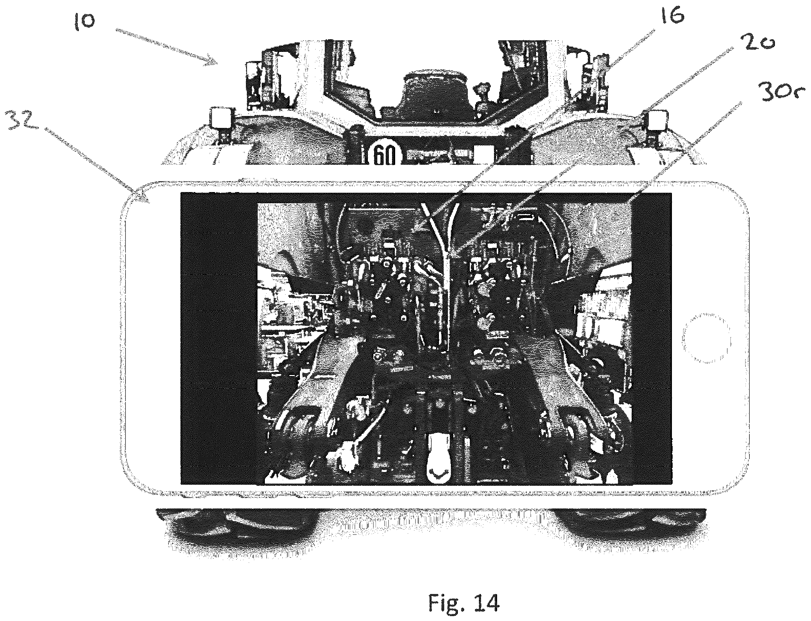

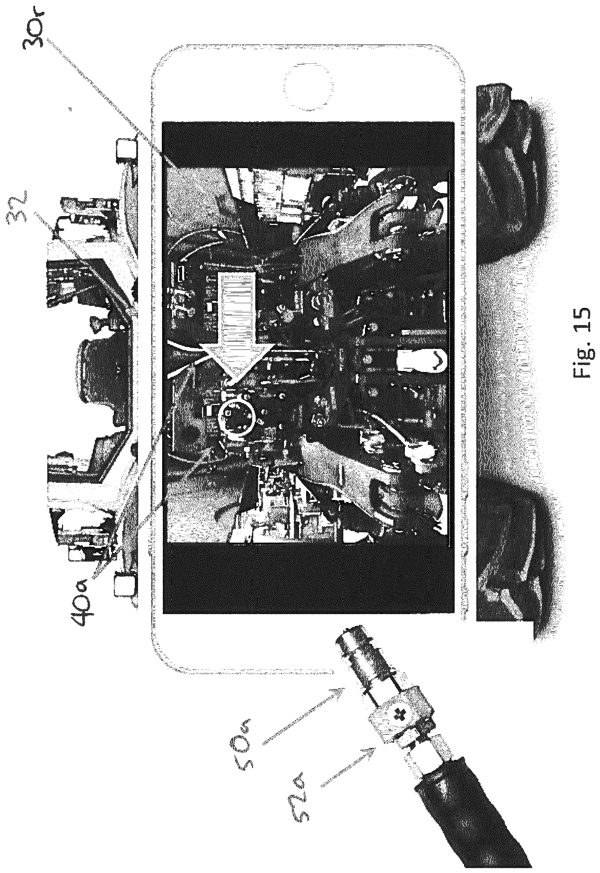

With reference to figure 14 reconnect the implement 12 to the tractor 10 with the assistance of the guide according to the invention, an operator views the connection area 16 of the tractor 10 on the display 33 of the mobile device 32. The connection area 16 may be viewed as a stored image that has been recalled from the mobile devices 32 memory or each tractor can be equipped with an identification device (read-out NFC tag on tractor i.e. an RFID NFC enabled zip tie and an automated process can get all relevant data from cloud). In this example, the connection area 16 is viewed as a real time image 30r on the display of the mobile device 32. Symbols 40a are overlaid on the real time image 30r which is displayed on the mobile device 32 (see figure 15). In other examples, the implement can be equipped with an identification device such as a read-out NFC tag and data automatically recalled from the cloud.

With reference to figure 15, the connection hose 50a or 50b of the implement 12 is brought into proximity with the mobile device 32. The mobile device 32 reads the NFC marker 52a or 52b of the respective connection hose 50a or 50b. Once the mobile device 30 has identified which connection hose 50a or 50b is in proximity, the mobile device 32 will augment the real time image 30r on the display to indicate which connection point 20 the connection hose 50a or 50b should be inserted into. It will be understood that the NFC marker 52a, 52b may be first read and then the operator view the connection area 16 with an augmented real time image.

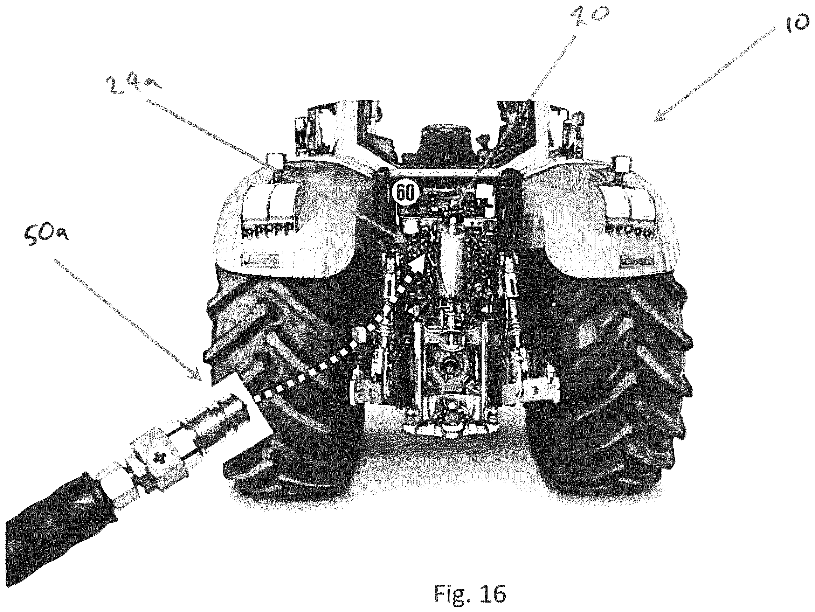

With reference to figure 16, now that the appropriate connection point 20 has been identified to the operator, the operator can connect the connection hose 50a, 50b to the tractor 10.

With reference to figure 11, connection hose 50a is held in proximity to the mobile device 30. The mobile device identifies that the connection hose 50 should be connected to the hydraulic hose connector 24a and indicates this on the real time image accordingly.

The operator repeats this process for all the hose or other connections which the implement 12 requires coupling to the connection area 16 of the tractor 10.

Once all the required connections have been made the, operator can load the stored setting for the implement 12 from the recipe library of the tractor 10.

It will be understood that the connection points 20 and/or the implement connectors described in the above specific example are preferably hydraulic couplings such as hydraulic valves and hoses, for the linking of hydraulic circuits between the agricultural vehicle and the implement, but other coupling types may be included, e.g. pneumatic couplings, electrical couplings, data buses, etc.

The guide according to the invention is initially provided as a simple list detailing which implement connector is to be coupled with which connection point. The list is be used with the identified connection points to generate a map showing the connection of the different implement connectors with the different connection points, which may then be displayed on the augmented image for ease of understanding of the operator.

Whilst in the specific example the implement connection list was generated by annotating an image of the connection area 16, the implement connection list may be a predefined connection guide, e.g. provided by a manufacturer or supplier of the implement, alternatively the implement connection list may be generated by an operator as their preferred way of connecting an implement to a vehicle. It will be understood that the connection points may be identified on the image of the connection area by performing an image analysis as described above, or by receiving operator input to identify the connection points of the connection area shown on the image.

It will also be understood that the step of receiving an indicator of an implement connector may comprise receiving a user input detailing data to be associated with the connection points 20 and/or the implement connectors, including but not limited to: connection labels, connector types, colour assignments, valve labels, switch types, etc. In a further example, it will be understood that an implement connection list may be generated when an operator is connecting an implement to an agricultural vehicle, as a mechanism for recording the particular connection configuration which was used by the operator. The stored implement connection list can be used as an input for an operator terminal of the agricultural vehicle, to configure operator controls of the operator terminal to reflect the particular implement connectors coupled with the connection points of the vehicle. In particular, the operator controls which actuate the different connection points of the vehicle can be updated to reflect the particular implement connectors controlled by the operator controls in question.

## Claims

1. A method for generating a guide for the connection of an implement (12) with an agricultural vehicle (10), the method comprising the steps of:
a) providing an image (30) of a connection area (16) of an agricultural vehicle (10), the connection area (16) for connection with an implement (12) having implement connectors (22, 24, 26, 28) to be coupled with an agricultural vehicle (10);
b) analysing the image (30) to identify at least one connection point (20) of the connection area (16);
c) providing an implement connection map which details how respective implement connectors (22, 24, 26, 28) are coupled with individual connection points (20) of the connection area (16);
d) generating an augmented image (30) of the connection area (16) based on the implement connection map;
wherein, in the augmented image (30), the at least one connection point (20) of the connection area (16) is provided with an indication (42, 44, 46, 48) of the particular implement connector (22, 24, 26, 28) to be coupled with one or each of the at least one connection point (20); and
wherein providing an implement connection map comprises receiving an implement connection list detailing a preferred coupling configuration of respective implement connectors (22, 24, 26, 28) with one or each of the at least one connection point (20) of the connection area (16).

2. The method according to claim 1 wherein the augmented image (30) is provided as a real-time augmented reality image.

3. The method according to claim 1 or claim 2 wherein the augmented image (30) is provided as a still or static captured image of the connection area (16) which is annotated with information regarding the at least one connection point (20).

4. The method according to any preceding claim further comprising the step of:
selecting the format of the augmented image (30).

5. The method according to any preceding claim wherein the step of analysing the image (30) to identify the at least one connection point (20) of the connection area (16) comprises:
performing an image processing of the image (30) to identify fiducial markers associated with one or each of the at least one connection point (20).

6. The method according to any preceding claim further comprising the steps of:
receiving an indicator for a particular implement connector (22, 24, 26, 28) to be coupled with the connection area (26);
identifying on the augmented image (30) the location of the identified connection point (20) to which the particular implement connector (22, 24, 26, 28) is to be coupled from the implement connection map.

7. The method according to any preceding claim wherein the step of receiving an implement connection list comprises:
retrieving the implement connection list from a memory storage device; and optionally:
downloading an implement connection list from a remote location or server.

8. The method according to any preceding claim, comprising generation of the implement connection list for use as an input to an operator terminal of an agricultural vehicle (10), by:
1) providing an image (30) of a connection area (16) of an agricultural vehicle (10), the connection area (16) for connection with an implement (12) having implement connectors (22, 24, 26, 28) to be coupled with the agricultural vehicle (10), the image (30) having at least one connection point (20) of the connection area (16) identified thereon;
2) receiving an indicator of an implement connector (22, 24, 26, 28) of an implement (12) to be coupled with at least one connection point (20) of the connection area (16);
3) storing an implement connection list comprising a listing of the at least one connection point (20) and the implement connectors (22, 24, 26, 28) to be coupled with one or each of the at least one connection point (20).

9. The method according to claims 6 to 8 wherein the step of receiving an indicator comprises:
i) receiving user input to indicate a selected connection point (20);
ii) receiving user input to indicate a selected implement connector (22, 24, 26, 28) to be connected with the selected connection point (20).

10. The method according to claims 6 to 9 wherein the step of receiving an indicator for a particular implement connector (22, 24, 26, 28) comprises one or more of:
i) an operator selection of the particular implement connector (22, 24, 26, 28) from an implement connection list;
ii) a direct input by the operator of the particular implement connector (22, 24, 26, 28) details;
iii) scanning a machine readable element (52) provided with the implement connector (22, 24, 26, 28).

11. The method according to claims 7 to 10 wherein the implement connection list is used as an input for an operator terminal of an agricultural vehicle (10), to facilitate configuration of the operator controls of the vehicle (10).

12. The method according to claims 7 to 10 wherein the implement connection list is:
transmitted directly from a mobile device (32) to the operator terminal of an agricultural vehicle (10); or stored on a memory device which is coupled with the operator terminal.

13. A mobile processing device (32) arranged to carry out the method of claim 1 to claim 12.

## Patentansprüche

1. Verfahren zum Generieren einer Anleitung zur Verbindung eines Geräts (12) mit einem landwirtschaftlichen Fahrzeug (10), wobei das Verfahren die Schritte aufweist:
a) Bereitstellen eines Bildes (30) eines Verbindungsbereichs (16) eines landwirtschaftlichen Fahrzeugs (10), wobei der Verbindungsbereich (16) zur Verbindung mit einem Gerät (12) mit Geräteverbindern (22, 24, 26, 28) für eine Kopplung mit einem landwirtschaftlichen Fahrzeug (10) dient;
b) Analysieren des Bildes (30), um mindestens einen Verbindungspunkt (20) des Verbindungsbereichs (16) zu identifizieren;
c) Bereitstellen eines Geräteverbindungsplans, welcher im Einzelnen angibt, wie jeweils Geräteverbinder (22, 24, 26, 28) mit individuellen Verbindungspunkten (20) des Verbindungsbereichs (16) verbunden werden;
d) Generieren eines vergrößerten Bildes (30) des Verbindungsbereichs (16) auf Basis des Geräteverbindungsplans;
wobei in dem vergrößerten Bild (30) der mindestens eine Verbindungspunkt (20) des Verbindungsbereichs (16) mit einem Indikator (42, 44, 46, 48) des jeweiligen Geräteverbinders (22, 24, 26, 28), der mit einem oder jedem des mindestens einen Verbindungspunkts (20) gekoppelt werden soll oder kann, ausgestattet ist; und
wobei das Bereitstellen eines Geräteverbindungsplans ein Empfangen einer Geräteverbindungsliste aufweist, die eine bevorzugte Kopplungskonfiguration der jeweiligen Geräteverbinder (22, 24, 26, 28) mit einem oder jedem des mindestens einen Verbindungspunkts (20) des Verbindungsbereichs (16) angibt.

2. Verfahren nach Anspruch 1, wobei das vergrößerten Bild (30) als vergrößertes Echtzeit-Realitätsbild bereitgestellt ist.

3. Verfahren nach Anspruch 1 oder Anspruch 2, wobei das vergrößerte Bild (30) als Standbild oder statisch aufgenommenes Bild des Verbindungsbereichs (16) bereitgestellt ist, welches mit Informationen bezüglich des mindestens einen Verbindungspunkts (20) versehen ist.

4. Verfahren nach einem der vorhergehenden Ansprüche, weiterhin mit dem Schritt: Wählen des Formats des vergrößerten Bildes (30).

5. Verfahren nach einem der vorhergehenden Ansprüche, wobei der Schritt des Analysierens des Bilds (30), um den mindestens einen Verbindungspunkt (20) des Verbindungsbereichs (16) zu identifizieren, aufweist:
Durchführen einer Bildverarbeitung des Bildes (30), um Bezugsmarkierungen, die mit einem oder jedem des mindestens einen Verbindungspunkts (20) verknüpft sind, zu identifizieren.

6. Verfahren nach einem der vorhergehenden Ansprüche, das die Schritte aufweist:
Empfangen eines Indikators für einen bestimmten Geräteverbinder (22, 24, 26, 28), der mit dem Verbindungsbereich (26) gekoppelt werden soll oder kann;
Identifizieren des Orts des identifizierten Verbindungspunkts (20), mit dem der bestimmte Geräteverbinder (22, 24, 26, 28) gekoppelt werden soll oder kann, in dem vergrößerten Bild (30) aus dem Geräteverbindungsplan.

7. Verfahren nach einem der vorhergehenden Ansprüche, wobei der Schritt Empfangen einer Geräteverbindungsliste aufweist:
Abrufen der Geräteverbindungsliste von einem Speichergerät;
und optional: Herunterladen einer Geräteverbindungsliste von einem entfernten Ort oder Server.

8. Verfahren nach einem der vorhergehenden Ansprüche, bei welchem eine Generierung der Geräteverbindungsliste zur Verwendung als eine Eingabe eines Bediener-Endgeräts eines landwirtschaftlichen Fahrzeugs (10) erfolgt durch:
1) Bereitstellen eines Bilds (30) eines Verbindungsbereichs (16) eines landwirtschaftlichen Fahrzeugs (10), wobei der Verbindungsbereich (16) zur Verbindung mit einem Gerät (12) mit Geräteverbindern (22, 24, 26, 28), die mit dem landwirtschaftlichen Fahrzeug (10) gekoppelt werden sollen oder können, dient, wobei das Bild (30) mindestens einen Verbindungspunkt (20) des Verbindungsbereichs (16), der darauf identifiziert worden ist, aufweist;
2) Empfangen eines Indikators eines Geräteverbinders (22, 24, 26, 28) eines Geräts (12), welches mit mindestens einem Verbindungspunkt (20) des Verbindungsbereichs (16) gekoppelt werden soll oder kann;
3) Speichern einer Geräteverbindungsliste mit einer Auflistung des mindestens einen Verbindungspunkts (20) und der Geräteverbinder (22, 24, 26, 28), welche mit einem oder jedem des mindestens einen Verbindungspunkts (20) gekoppelt werden sollen oder können.

9. Verfahren nach einem der Ansprüche 6 bis 8, wobei der Schritt des Empfangens eines Indikators aufweist:
i) Empfangen einer Benutzereingabe zur Identifizierung eines gewählten Verbindungspunkts (20);
ii) Empfangen einer Benutzereingabe zur Identifizierung eines gewählten Geräteverbinders (22, 24, 26, 28), der mit dem gewählten Verbindungspunkt (20) verbunden wrden soll oder kann.

10. Verfahren nach einem der Ansprüche 6 bis 9, wobei der Schritt des Empfangens eines Indikators eines bestimmten Geräteverbinders (22, 24, 26, 28) mindestens einen der Schritte aufweist:
i) eine Auswahl des bestimmten Geräteverbinders (22, 24, 26, 28) aus einer Geräteverbindungsliste durch den Benutzer;
ii) eine Direkteingabe des bestimmten Geräteverbinders (22, 24, 26, 28) durch den Bediener;
iii) ein Scannen eines maschinenlesbaren Elements (52), das mit dem Geräteverbinder (22, 24, 26, 28) bereitgestellt wird.

11. Verfahren nach einem der Ansprüche 7 bis 10, wobei die Geräteverbindungsliste als eine Eingabe für eine Bedieneinheit eines landwirtschaftlichen Fahrzeugs (10) verwendet wird, um eine Konfiguration der Bedienersteuerungen oder -steuerelemente des Fahrzeugs (10) zu erleichtern.

12. Verfahren nach einem der Ansprüche 7 bis 10, wobei die Geräteverbindungsliste:
direkt von einem mobilen Gerät (32) an die Bedieneinheit eines landwirtschaftlichen Fahrzeugs (10) übermittelt wird oder
auf einem Speichergerät, das mit der Bedieneinheit gekoppelt ist, gespeichert ist.

13. Mobiles Verarbeitungsgerät (32), welches geeignet ausgestaltet ist um das Verfahren nach einem der Ansprüche 1 bis 12 auszuführen.

## Revendications

1. Procédé de génération d'un guide afin d'assurer le couplage d'un outillage (12) à un véhicule agricole (10), le procédé comprenant les étapes de :
a) fourniture d'une image (30) d'une zone de couplage (16) d'un véhicule agricole (10), la zone de couplage (16) destinée à assurer le couplage avec un outillage (12) comportant des coupleurs d'outillage (22, 24, 26, 28) destinés à être couplés à un véhicule agricole (10) ;
b) analyse de l'image (30) afin d'identifier un ou plusieurs points de couplage (20) de la zone de couplage (16) ;
c) fourniture d'une carte de couplage d'outillage qui détaille comment des coupleurs d'outillage (22, 24, 26, 28) respectifs sont couplés à différents points de couplage (20) individuels de la zone de couplage (16) ;
d) génération d'une image de réalité augmentée (30) de la zone de couplage (16) sur la base de la carte de couplage d'outillage ;
dans lequel, sur l'image augmentée (30), le ou les points de couplage (20) de la zone de couplage (16) comportent une indication (42, 44, 46, 48) du coupleur d'outillage (22, 24, 26, 28) particulier destiné à être couplé à un ou à chacun des un ou plusieurs points de couplage (20) ; et
dans lequel la fourniture d'une carte de couplage d'outillage comprend la réception d'une liste de couplage d'outillage détaillant une configuration de couplage préférée de coupleurs d'outillage (22, 24, 26, 28) respectifs avec un ou chacun des un ou plusieurs points de couplage (20) de la zone de couplage (16).

2. Procédé selon la revendication 1, dans lequel l'image augmentée (30) est fournie sous la forme d'une image de réalité augmentée en temps réel.

3. Procédé selon la revendication 1, ou 2, dans lequel l'image augmentée (30) est formée comme une image capturée immobile ou statique de la zone de couplage (16) qui comprend des informations concernant le ou les points de couplage (20).

4. Procédé selon l'une quelconque des revendications précédentes, comprenant, en outre, l'étape de :
sélection du format de l'image augmentée (30).

5. Procédé selon l'une quelconque des revendications précédentes, dans lequel l'étape d'analyse de l'image (30) afin d'identifier le ou les points de couplage (20) de la zone de couplage (16) comprend :
l'exécution d'un traitement d'image de l'image (30) afin d'identifier des marqueurs de référence liés à un ou à chacun des un ou plusieurs points de couplage (20).

6. Procédé selon l'une quelconque des revendications précédentes, comprenant, en outre, les étapes de :
réception d'un indicateur d'un coupleur d'outillage (22, 24, 26, 28) particulier à coupler à la zone de couplage (26) ;
identification, sur l'image augmentée (30) de la position du point de couplage (20) identifié auquel le coupleur d'outillage (22, 24, 26, 28) particulier doit être couplé à partir de la carte de couplage d'outillage.

7. Procédé selon l'une quelconque des revendications précédentes dans lequel l'étape de réception d'une liste de couplage d'outillage comprend :
l'extraction de la liste de couplage d'outillage à partir d'un dispositif de mémorisation ; et, en variante :
le téléchargement d'une liste de couplage d'outillage à partir d'un site ou serveur distant.

8. Procédé selon l'une quelconque des revendications précédentes, comprenant la génération de la liste de couplage d'outillage en vue d'une utilisation comme entrée sur un terminal d'opérateur d'un véhicule agricole (10), par :
1) fourniture d'une image (30) d'une zone de couplage (16) d'un véhicule agricole (10), la zone de couplage (16) destinée à assurer le couplage avec un outillage (12) comportant des coupleurs d'outillage (22, 24, 26, 28) destinés à être couplés au véhicule agricole (10), un ou plusieurs points de couplage (20) de la zone de couplage (16) étant identifiés sur l'image (30) ;
2) réception d'un indicateur d'un coupleur d'outillage (22, 24, 26, 28) d'un outillage (12) destiné à être couplé à au moins un point de couplage (20) de la zone de couplage (16) ;
3) mémorisation d'une liste de couplage d'outillage comprenant une liste du ou des points de couplage (20) et des coupleurs d'outillage (22, 24, 26, 28) destinés à être couplés à un ou chacun des points de couplage (20).

9. Procédé selon les revendications 6 à 8, dans lequel l'étape de réception d'un indicateur comprend :
i) la réception d'une entrée d'utilisateur afin d'indiquer un point de couplage (20) sélectionné ;
ii) la réception d'une entrée d'utilisateur afin d'indiquer un coupleur d'outillage (22, 24, 26, 28) sélectionné destiné à être couplé au point de couplage sélectionné (20).

10. Procédé selon les revendications 6 à 9, dans lequel l'étape de réception d'un indicateur d'un coupleur d'outillage (22, 24, 26, 28) particulier comprend une ou plusieurs opérations parmi :
i) une sélection par l'opérateur du coupleur d'outillage (22, 24, 26, 28) particulier à partir d'une liste de couplage d'outillage ;
ii) une entrée directe par l'opérateur des détails du coupleur d'outillage (22, 24, 26, 28) particulier ;
iii) la scrutation d'un élément pouvant être lu par une machine (52) comportant le coupleur d'outillage (22, 24, 26, 28).

11. Procédé selon les revendications 7 à 10, dans lequel la liste de couplage d'outillage est utilisée comme entrée pour un terminal d'opérateur d'un véhicule agricole (10) afin de faciliter la configuration des commandes d'opérateur du véhicule (10).

12. Procédé selon les revendications 7 à 10, dans lequel la liste de couplage d'outillage est :
transmise directement à partir d'un dispositif mobile (32) au terminal d'opérateur d'un véhicule agricole (10) ; ou mémorisée sur un dispositif de mémorisation qui est couplé au terminal d'opérateur.

13. Dispositif de traitement mobile (32) agencé de manière à exécuter le procédé selon les revendications 1 à 12.
